# EUROPÄISCHE PATENTSCHRIFT

(11) **EP 1 474 065 B1**
(45) Veröffentlichungstag und Bekanntmachung des Hinweises auf die Patenterteilung: **16.04.2008**
(21) Anmeldenummer: 03739378.2
(22) Anmeldetag: 17.01.2003
(51) Int. Cl.: A61C 13/083

(54) **VERFAHREN ZUM HERSTELLEN EINES ZAHNERSATZES ODER KUNSTZAHNS**
METHOD FOR PRODUCING A DENTAL PROSTHESIS OR AN ARTIFICIAL TOOTH
PROCEDE POUR PRODUIRE UNE PROTHESE DENTAIRE OU UNE DENT ARTIFICIELLE

(30) Priorität: 12.02.2002 DE 10205739
(43) Veröffentlichungstag der Anmeldung: 10.11.2004
(73) Patentinhaber: Wennemann, Ulrich, 79224 Umkirch (DE)
(72) Erfinder: Wennemann, Ulrich, 79224 Umkirch (DE)
(74) Vertreter: Maucher, Wolfgang
(86) Internationale Anmeldenummer: PCT/EP2003/000440
(87) Internationale Veröffentlichungsnummer: WO 2003/068100

(56) Entgegenhaltungen:
- EP-A- 0 384 908
- US-A- 4 230 455
- US-A- 4 969 913
- DATABASE WPI Section Ch, Week 198615 Derwent Publications Ltd., London, GB; Class D21, AN 1986-096850 XP002239600 & JP 61 040884 A (KORANSHA KK), 27. Februar 1986 (1986-02-27)

## Beschreibung

Die Erfindung betrifft ein Verfahren zum Herstellen eines als Zahnersatz oder Kunstzahn, insbesondere als Zahnbrücke, ausgebildeten Keramikteils, wobei in einem Pulverspritzgießprozess eine keramische Formmasse, die als Bestandteile zumindest ein keramisches Pulver und einen Binder enthält, unter Einwirkung von Wärme und/oder Druck in die Innenhöhlung eines Formwerkzeugs eingespritzt wird und dort zu einem Formteil-Grünling erstarrt.

Bei einem aus DE 42 10 781 C2 bekannten Verfahren zur Herstellung von Kunstzähnen wird zunächst ein keramischer Kern gebrannt, der die Farbe von Dentin aufweist. Dabei ist die Größe des Kerns gegenüber der Größe des fertigen Kunstzahns reduziert. Auf den Kern wird dann vom Zahntechniker sowohl Dentinmasse als auch eine Schmelzschicht aus dentalkeramischen Massen aufgetragen. Anschließend wird der so vorgefertigte Kunstzahn bei Temperaturen von 900 bis 960° C gebrannt. Beim Brennen kommt es zu einer festen und dauerhaften Verbindung der verschiedenen keramischen Massen. Dadurch, dass die Größe des Kerns gegenüber der Größe des entsprechenden Kunstzahns reduziert ist, kann der Zahntechniker sowohl opakisierte Dentinmasse als auch transparente Schmelzschichten aus dentalkeramischen Massen auf den Kern auftragen. Die so erhaltenen Kunstzähne sind zwar bezüglich ihrer Farbe und ihrer optischen Eigenschaften relativ gut an entsprechende natürliche Zähne angepasst. Die Herstellung dieser Kunstzähne ist jedoch noch vergleichsweise aufwendig und teuer.

Aus DATABASE WPI Section CH, Week 198615 Derwent Publications Ltd., Londen, GB ; Class D21, AN 1986-096850 XP002239600 betreffend JP 61-40884 ist ein Keramikmaterial für Knochen oder Zahnimplantate bekannt, welches einen Kern aus Zirkonoxidkeramik und eine Beschichtung aus Kalziumphosphat aufweist. Die Oberfläche des Keramikkerns wird beschichtet, bevor dieser Kern gebrannt wird, und sie verschmilzt mit der Kernkomponente während des Brennvorganges. Es handelt sich also um ein Verfahren anderer Gattung, bei welchem kein Pulverspritzgussverfahren zur Anwendung kommt.

Die Anwendung eines Pulverspritzgussverfahrens bei der Herstellung eines Formteil-Grünlings ist aus EP 0 384 908 A2 bekannt. Die Herstellung von Kunstzähnen ist jedoch noch vergleichsweise aufwendig und teuer.

Es besteht deshalb die Aufgabe, ein Verfahren der eingangs genannten Art zu schaffen, das eine kostengünstige serienmäßige Herstellung von Zahnersatz oder Kunstzähnen, insbesondere von Zahnbrücken, ermöglicht.

Die Lösung dieser Aufgabe besteht darin, dass nach dem Spritzen des Formteil-Grünlings in wenigstens einem weiteren Pulverspritzgießprozess zumindest eine weitere keramische Formmasse unter Einwirkung von Wärme und/oder Druck an den zuvor hergestellten Formteil-Grünling angespritzt wird, dass sich die Formmassen von wenigstens zwei der Pulverspritzgießprozesse voneinander unterscheiden, und dass der durch die Pulverspritzgießprozesse erhaltene mehrkomponentige Formteil-Grünling zur Bildung des fertigen Keramikteils entbindert und gesintert wird, wobei das keramische Pulver wenigstens eines Pulverspritzgießprozesses derart ausgebildet ist, dass die daraus hergestellte Keramikkomponente des fertigen Keramikteils transparent oder transluzent ist und wobei das keramische Pulver wenigstens eines weiteren Pulverspritzgießprozesses derart ausgebildet ist, dass die daraus hergestellte Keramikkomponente des fertigen Keramikteils weniger transparent ist als die andere Keramikkomponente.

Das erfindungsgemäße Verfahren eignet sich also zur Herstellung von Kunstzähnen, Zahnbrücken oder dergleichen Zahnersatz. In vorteilhafter Weise ergibt sich dabei ein aus mehreren fest und dauerhaft miteinander verbundenen keramischen Komponenten bestehendes Keramikteil, das kostengünstig in Pulverspritzgießtechnik herstellbar ist. Somit kann eine aufwändige manuelle Bearbeitung des Keramikteils eingespart werden. Für die einzelnen Pulverspritzgießprozesse werden zweckmäßigerweise Formmassen mit ähnlichen oder identischen Eigenschaften verwendet, die so aufeinander abgestimmt sind, dass beim Entbindern der Binder nahezu vollständig oder vollständig aus dem Formteil-Grünling entfernt werden kann.

Dabei ist die transparente oder transluzente Keramikkomponente des Keramikteils an der Außenwandung der Zahnbrücke oder des Zahnersatzes angeordnet, so dass die dahinter befindliche opakere Keramikkomponente durch die transparente oder transluzente Keramikkomponente hindurchscheint. Durch diese Maßnahme wird eine natürliche Farbwirkung und Transparenz der keramischen Zahnsubstanz erreicht. Mit dem erfindungsgemäßen Verfahren können verschiedene Zahntypen, -formen und -größen hergestellt werden.

Bei einer besonders vorteilhaften Ausführungsform der Erfindung ist vorgesehen, dass der mehrkomponentige Formteil-Grünling während des Sinterprozesses einem Unterdruck ausgesetzt wird, und dass der Unterdruck oder der Unterdruckverlauf so auf die Temperatur oder den Temperaturverlauf des Sinterprozesses abgestimmt wird, dass zumindest eine durch Pulverspritzgießen hergestellte äußere Keramikkomponente, vorzugsweise alle pulvergespritzten Keramikkomponenten des Keramikteils nach Beendigung des Sinterprozesses weitgehend oder vollständig porenfrei ist sind. Dadurch wird einerseits eine hohe Festigkeit des Keramikteils erreicht und andererseits wird aber auch die Herstellung eines Keramikteils mit einer oder mehreren optisch transparenten, pulvergespritzten Keramikkomponenten ermöglicht.

Bei einer vorteilhaften Ausführungsform der Erfindung unterscheiden sich die Schmelztemperaturen der zum Pulverspritzgießen zweier unmittelbar aneinander angrenzender Keramikkomponenten des mehrkomponentigen Formteil-Grünlings verwendeten keramischen Pulver um weniger als 150° C, insbesondere um weniger als 100° C und vorzugsweise um weniger als 50 ° C. Durch diese Maßnahme wird mit an sich bekannten Entbinderungsprozessen, wie z.B. der katalytischen Entbinderung, ein einfaches und nahezu oder vollständig rückstandsfreies Entfernen des Binders aus dem Formteil-Grünling ermöglicht. Bei dem anschließenden Sinterprozess wird eine feste und dauerhafte Verbindung der einzelnen Keramikkomponenten des Keramikteils erreicht.

Vorteilhaft ist, wenn sich der Wärmeausdehnungskoeffizient der zum Pulverspritzgießen zweier unmittelbar aneinander angrenzender Keramikkomponenten des mehrkomponentigen Formteil-Grünlings verwendeten keramischen Pulver um weniger als 15%, insbesondere um weniger als 10% und vorzugsweise um weniger als 5% voneinander unterscheiden. Auch durch diese Maßnahme kann eine makroskopisch und mikroskopisch einwandfreie Verbindung der einzelnen Keramikkomponenten des Keramikteils erreicht werden.

Eine feste und dauerhafte Verbindung der einzelnen Keramikkomponenten des Keramikteils kann auch dadurch erreicht werden, dass die Korngröße der keramischen Pulver kleiner als 50µm, insbesondere kleiner als 30µm und vorzugsweise kleiner als 10µm ist.

Bei einer zweckmäßigen Ausgestaltung des Verfahrens wird der in dem ersten Pulverspritzgießprozess hergestellte Formteil-Grünling mit wenigstens einem weiteren Pulverspritzgießprozess mit einer keramischen Formmasse zumindest teilumspritzt und gegebenenfalls vollständig umspritzt. Durch diese Maßnahme kann ein Keramikteil hergestellt werden, das eine Schichtanordnung mit zwei oder mehr Keramikschichten aufweist. Dabei ist es sogar möglich, dass wenigstens eine Schicht ringförmig wenigstens eine weitere Schicht umgrenzt.

Bei einer vorteilhaften Ausführungsform der Erfindung ist das keramische Pulver wenigstens eines Pulverspritzgießprozesses elektrisch leitfähig und das keramische Pulver wenigstens eines weiteren Pulverspritzgießprozesses elektrisch isolierend. Mit dem elektrisch leitfähigen Pulver kann dann beispielsweise eine als elektrischer Leiter, insbesondere als Leiterbahn ausgebildete Keramikkomponente des Keramikteils und mit dem elektrisch isolierenden Pulver eine den Leiter oder die Leiterbahn umgrenzende oder überdeckende isolierende Keramikkomponente des Keramikteils gefertigt werden. Das Verfahren kann somit auch in der Elektro- und/oder Elektronikindustrie vorteilhaft verwendet werden.

Bei einer vorteilhaften Ausführungsform der Erfindung wird in die Innenhöhlung des Formwerkzeugs ein Trägerteil formschlüssig eingesetzt und bei wenigstens einem Pulverspritzgießprozess wird mindestens eine keramische Formmasse an dieses Trägerteil angespritzt. Dabei ist es sogar möglich, dass das Trägerteil mit der Formmasse oder den Formmassen ringförmig umspritzt wird. Durch das Trägerteil wird eine hohe Biege-, Bruch- und/oder Zugfestigkeit des Keramikteils ermöglicht. Das Trägerteil kann wenigstens einen Verankerungsvorsprung aufweisen, der zum Befestigen des Keramikteils dient.

Das Trägerteil kann aus einem metallischen Werkstoff bestehen. Das Trägerteil ist dann mit bekannten Verfahren herzustellen, beispielsweise durch Gießen.
Bei einer bevorzugten Ausführungsform besteht das Trägerteil aus einem keramischen Werkstoff, vorzugsweise aus Zirkonoxid, Aluminiumoxid, Siliziumnitrid und/oder Silizumkarbid. Das Trägerteil weist dann eine vergleichsweise große mechanische Belastbarkeit auf. Bei einem Verfahren zur Herstellung einer Zahnbrücke oder eines Zahnersatzes hat der keramische Werkstoff des Trägerteils außerdem den Vorteil einer guten biologischen Verträglichkeit.

Bei einer zweckmäßigen Ausgestaltung der Erfindung ist vorgesehen, dass das Trägerteil wenigstens einen Verankerungsvorsprung aufweist, der quer zueinander verlaufende Seitenwände hat, dass bei wenigstens einem Pulverspritzgießprozess an mindestens eine der Seitenwände eine keramische Formmasse derart angespritzt wird, dass sie seitlich über den Rand dieser Seitenwand oder die gerade Verlängerung wenigstens einer an diese Seitenwand angrenzenden Seitenwand um ein Überstandsmaß übersteht und dass das Überstandsmaß unter Berücksichtigung einer beim Entbindern und/oder Sintern des Formteil-Grünlings auftretenden Schrumpfung derart gewählt wird, das die angespritzte Formmasse nach dem Sintern bündig mit dem Rand der sie aufweisenden Seitenwand oder der geraden Verlängerung der wenigstens einen an diese Seitenwand angrenzenden Seitenwand abschließt. Das Verfahren ermöglicht dann auf einfache Weise die Herstellung einer Zahnbrücke mit großer Biege-, Bruch- und/oder Zugfestigkeit, wobei die in Gebrauchsstellung sichtbaren Bereiche der Zahnbrücke bezüglich ihrer Farbwirkung und Transparenz etwa der Farbwirkung und Transparenz eines natürlichen Zahns entsprechen. Da die an den Verankerungsvorsprung angespritzte Formmasse bei der fertigen Zahnbrücke bündig mit dem Rand der die Formmasse aufweisenden Seitenwand oder der geraden Verlängerung der wenigstens einen an diese Seitenwand angrenzenden Seitenwand abschließt, ermöglicht die Zahnbrücke eine einfache Präparation der für die Verankerung der Zahnbrücke vorgesehenen Nachbarzähne mit der aus DE 199 48 393 C1 bekannten Vorrichtung.

Erwähnt werden soll noch, dass mit dem erfindungsgemäßen Verfahren auch mehrere Keramik-Pulverspritzgussschichten ineinander gespritzt werden können.

Nachfolgend ist ein Ausführungsbeispiel der Erfindung anhand der Zeichnung näher erläutert. Es zeigen:
- Fig.1: eine Längsseitenansicht eines Trägerteils,
- Fig.2: eine Seitenansicht eines durch Anspritzen einer keramischen Formmasse an das Trägerteil hergestellten Formteil-Grünlings, wobei verdeckte Kanten des Trägerteils strichliniert dargestellt sind,
- Fig.3: eine Längsseitenansicht eines durch Anspritzen einer weiteren keramischen Komponente an den in Fig.2 gezeigten Formteil-Grünling hergestellten mehrkomponentigen Formteil-Grünlings, wobei verdeckte Kanten strichliniert dargestellt sind,
- Fig.4: eine Längsseitenansicht eines durch Entbindern und Sintern des in Fig.3 gezeigten Formteil-Grünlings hergestellten Keramikteils,
- Fig.5: eine Schmalseitenansicht des in Fig.3 gezeigten Keramikteils,
- Fig.6: eine Schmalseitenansicht des in Fig.4 gezeigten Keramikteils,
- Fig.7: eine Aufsicht auf ein erstes Formwerkzeugteil einer Spritzgießmaschine, das auf einer ersten Formplatte einer Schließvorrichtung aufgespannt ist,
- Fig.8: eine Aufsicht auf ein zweites Formwerkzeugteil einer Spritzgießmaschine, das auf der zweiten Formplatte der Schließvorrichtung aufgespannt ist, und

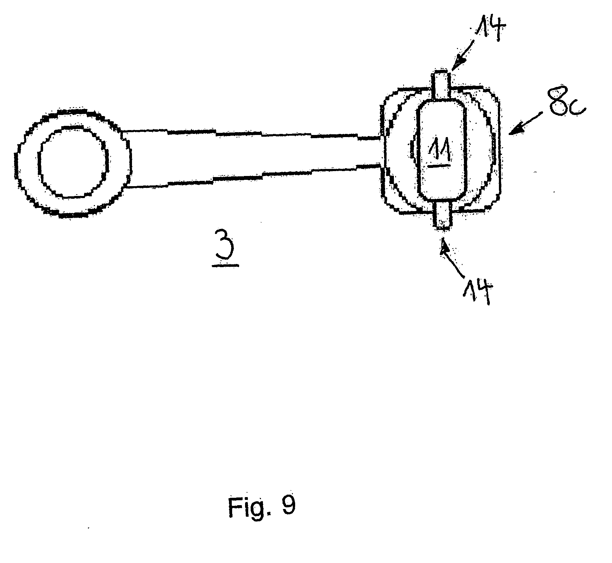

- Fig.9: eine vergrößere Teilaufsicht auf das zweite Formwerkzeugteil, wobei in die Innenhöhlung dieses Formwerkzeugteils ein Trägerteil eingesetzt ist.

Eine Pulverspritzgießmaschine zum Herstellen eines als Zahnbrücke zum Ersetzen wenigstens eines fehlenden Zahns ausgebildeten Keramikteils 1 weist eine in der Zeichnung nicht näher dargestellte Spritzvorrichtung zum Einspritzen einer keramischen Formmasse in die Innenhöhlung eines temperierten Formwerkzeugs und eine Formschließvorrichtung zum Öffnen und Schließen des Formwerkzeugs auf. Die Spritzvorrichtung hat eine Einfüllöffnung, in die ein Granulat einfüllbar ist, das als Bestandteile zumindest ein keramisches Pulver und einen thermoplastischen Binder enthält. Die Einfüllöffnung ist über einen an sich bekannten Plastifizierzylinder mit einer Spritzdüse verbunden. In dem Plastifizierzylinder ist eine Förderschnecke angeordnet, in der das Granulat unter Einwirkung von Druck und Wärme zu einer plastifizierbaren Formmasse aufgeschmolzen und zu der Spritzdüse gefördert wird. Zum Einspritzen der keramischen Formmasse in die Innenhöhlung des Formwerkzeugs ist die Spritzdüse an einer Einlassöffnung eines in dem Formwerkzeug vorgesehenen Zuführkanals für die Formmasse positionierbar.

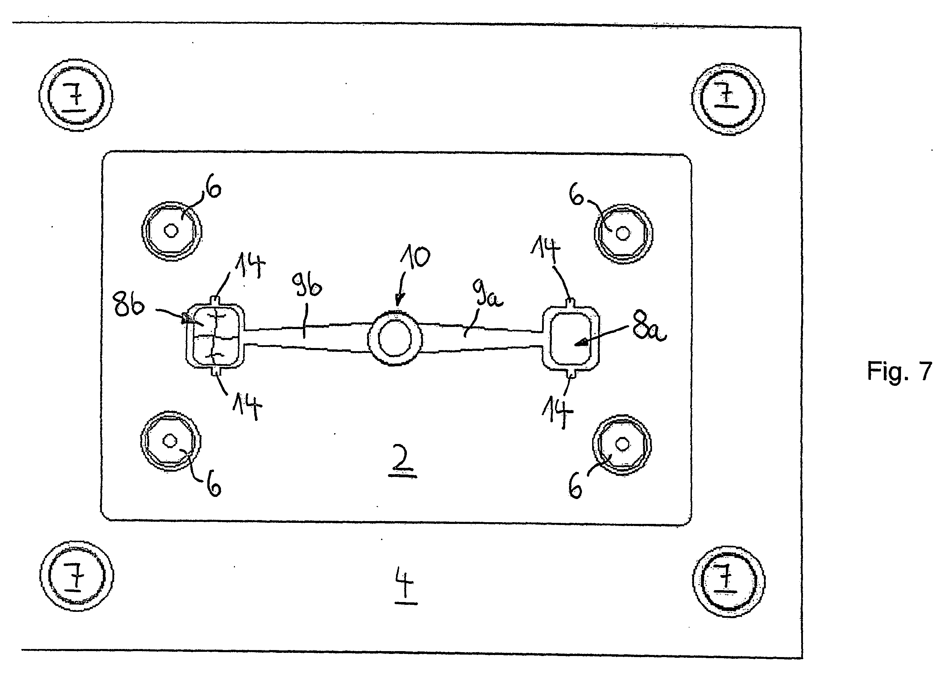

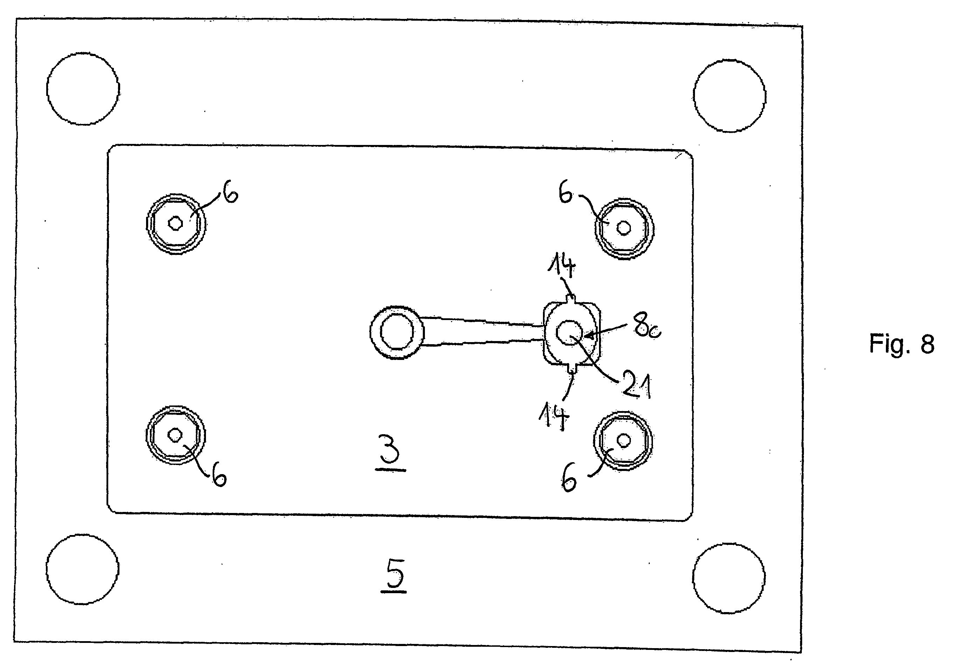

In Fig.7 und 8 ist erkennbar, dass das Formwerkzeug ein erstes Formwerkzeugteil 2 und ein zweites Formwerkzeugteil 3 aufweist, die zwischen einer Offenstellung und einer Schließstellung relativ zueinander verstellbar sind. Das erste Formwerkzeugteil 2 ist auf einer ersten Formplatte 4 und das zweite Formwerkzeugteil 3 auf einer zweiten Formplatte 5 mit Spannelementen 6 in einer vorgegebenen Lage aufgespannt. An der ersten Formplatte 4 sind in an sich bekannter Weise Führungssäulen 7 angeordnet, die quer zu den Erstreckungsebenen der Formwerkzeugteile 2, 3 verlaufen. Auf diesen Führungssäulen 7 ist die zweite Formplatte 5 zum Öffnen und Schließen des Formwerkzeugs auf die erste Formplatte zu- und von dieser wegverschiebbar gelagert.

In Fig.7 und 8 ist weiter erkennbar, dass die Innenhöhlung des Formwerkzeugs Kavitäten aufweist, die in den in Gebrauchsstellung einander zugewandten Wandungen der Formwerkzeugteile 2, 3 beidseits der Trennebene des Formwerkzeugs vorgesehen sind. Das Formwerkzeug ist als Wendewerkzeug ausgebildet, dessen Formwerkzeugteile 2, 3 in zwei bezüglich einer Wendeachse um 180° versetzt zueinander angeordneten Wendelagen in Schließstellung bringbar sind.

In Fig.7 ist erkennbar, dass das spritzdüsenseitige erste Formwerkzeugteil 2 eine erste Kavität 8a und eine zweite Kavität 8b aufweist, die bezüglich der Wendeachse um 180° versetzt zueinander angeordnet sind. Eine dritte Kavität 8c ist in dem zweiten Formwerkzeugteil 3 vorgesehen. In einer ersten Wendelage liegt die dritte Kavität 8c bei in Schließstellung befindlichem Formwerkzeug der ersten Kavität 8a gegenüber und bildet mit dieser eine erste Innenhöhlung. In einer zweiten Wendelage liegt die dritte Kavität 8c bei in Schließstellung befindlichem Formwerkzeug der zweiten Kavität 8b gegenüber und bildet mit dieser eine zweite Innenhöhlung, deren Abmessungen größer sind als die der ersten Innenhöhlung.

Die Kavitäten 8a, 8b sind jeweils über einen Zweig 9a, 9b des Zuführkanals mit einer Verzweigungsstelle 10 verbunden, die über einen gemeinsamen Zuführkanalabschnitt an der Spritzdüse angeschlossen ist. Zum Wechselweise Verbinden der Zuführkanal-Zweige 9a, 9b mit der Spritzdüse ist an der Verzweigungsstelle ein in der Zeichnung nicht näher dargestelltes Absperrelement angeordnet.

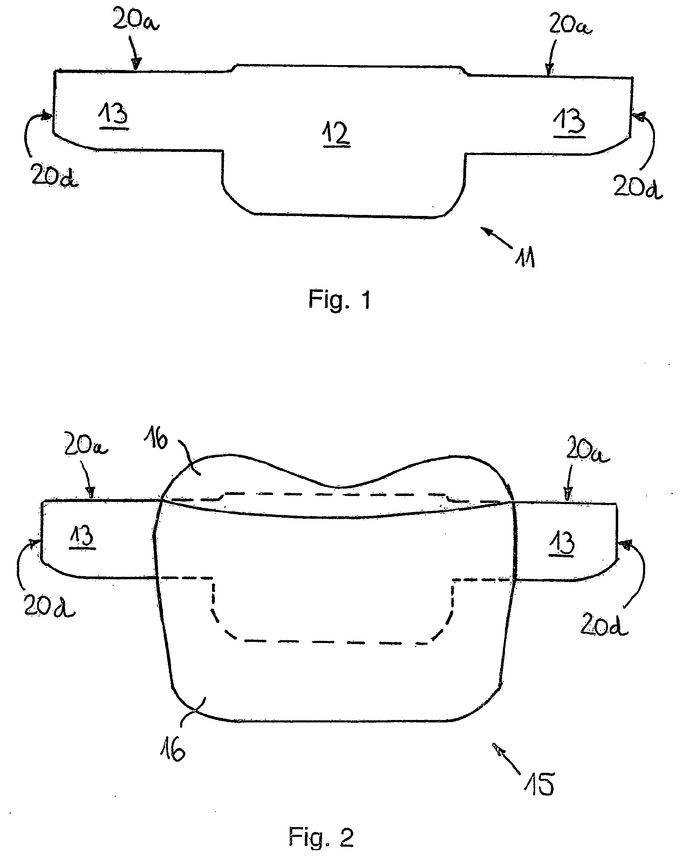

Bei der Herstellung der Zahnbrücke wird zunächst ein brückenartiges Trägerteil 11 gefertigt. Wie in Figur 1 erkennbar ist, hat das Trägerteil 11 einen zentralen Bereich 12, an dem beidseits Verankerungsvorsprünge 13 vorstehen, die durch die freien Enden des Trägerteils 11 gebildet sind. Als Werkstoff für die Herstellung des Trägerteils 11 wird eine biokompatible Keramik verwendet, insbesondere eine Zirkonoxid-Keramik, die wegen ihrer großen Härte bevorzugt wird. Es ist aber auch möglich, das Trägerteil 11 aus einem legierten oder unlegierten metallischen Werkstoff zu fertigen, beispielsweise aus Gold oder Titan.

Bei in Offenstellung befindlichem Formwerkzeug wird das Trägerteil 11 mit den Verankerungsvorsprüngen 13 in dazu passende Aufnahmen 14 der Kavität 8a oder 8c eingesetzt. Danach wird das in der ersten Wendelage befindliche Formwerkzeug geschlossen. Die Abmessungen der durch die Kavitäten 8a, 8c gebildeten Innenhöhlung, insbesondere die lichte Weite zwischen den Aufnahmen 14, sind derart auf die Abmessungen des Trägerteils 11 abgestimmt, dass dieses in Schließstellung des Formwerkzeugs formschlüssig in der Innenhöhlung gehalten ist.

Das Trägerteil 11 ist dadurch in einer vorbestimmten Lage exakt in der Innenhöhlung positioniert.

In einem ersten Pulverspritzgießprozess wird eine erste keramische Formmasse zur Bildung eines ersten Formteil-Grünlings 15 unter Einwirkung von Wärme und Druck in die erste Innenhöhlung eines Formwerkzeugs eingespritzt. Bei der ersten keramischen Formmasse handelt es sich um eine an sich bekannte Dentalkeramik, die ein Dentinpulver und einen thermoplastischen Binder enthält. Das keramische Pulver ist derart ausgebildet, dass die daraus hergestellte Keramikkomponente des Keramikteils 1 opak oder wenig transparent ist.

Als Binder kann ein handelsüblicher Binder für Keramikspritzguss verwendet werden, beispielsweise ein Binder für Wasserentbinderung, Lösungsmittelentbinderung, katalytische Entbinderung und/oder thermische Entbinderung.

In Fig.2 ist erkennbar, dass bei dem ersten Pulverspritzgießprozess eine erste Keramikkomponente 16 an das Trägerteil 11 angespritzt wird, welche den zentralen Bereich 12 des Trägerteils 11 und die zu dem zentralen Bereich 12 benachbarten Abschnitte der Verankerungsvorsprünge 13 ringförmig umgrenzt. Die freien Enden der Verankerungsvorsprünge 13 liegen während des Pulverspritzgießprozess dicht an der benachbarten Wandung der Aufnahmen 14 an, so dass sie mit der keramischen Formmasse nicht in Kontakt geraten.

Nach dem Erstarren der keramischen Formmasse wird das Formwerkzeug geöffnet. Die Kavitäten 8a und 8c sind derart ausgebildet, dass sich das zweite Formwerkzeugteil 3 beim Öffnen des Formwerkzeugs von dem Formteil-Grünling 15 ablöst, während dieser in der Kavität 8a des ersten Formwerkzeugteils 3 verbleibt. Das in Offenstellung befindliche Formwerkzeug wird dann in die zweite Wendelage gebracht und zur Durchführung eines zweiten Pulverspritzgießprozesses wieder geschlossen. In Schließstellung des Formwerkzeugs bilden die Kavitäten 8b und 8c eine zweite Innenhöhlung, die den Formteil-Grünling 15 aufnimmt.

In dem zweiten Pulverspritzgießprozess wird zur Bildung eines mehrkomponentigen zweiten Formteil-Grünlings 17 eine zweite keramische Formmasse unter Einwirkung von Wärme und/oder Druck in die zweite Innenhöhlung eingespritzt. Bei dieser Formmasse handelt es sich um eine an sich bekannte Dentalkeramik, die ein Schmelzkeramikpulver und einen thermoplastischen Binder enthält. Die Zusammensetzung des keramischen Pulvers unterscheidet sich insoweit von den derjenigen des für den ersten Pulverspritzgießprozesses verwendeten Keramikpulvers, dass die in dem zweiten Pulverspritzgießprozess hergestellte Keramikkomponente transparenter ist als die in dem ersten Pulverspritzgießprozess hergestellte Keramikkomponente. Im Übrigen stimmt die Zusammensetzung des ersten für den zweiten Pulverspritzgießprozess verwendeten Keramikpulvers im Wesentlichen mit der Zusammensetzung des ersten für den ersten Pulverspritzgießprozess verwendeten Keramikpulvers überein.

Als Binder für den zweiten Pulverspritzgießprozess kann ein handelsüblicher Binder für Keramikspritzguss verwendet werden, der vorzugsweise mit dem für den ersten Pulverspritzgießprozess verwendeten Binder übereinstimmt.

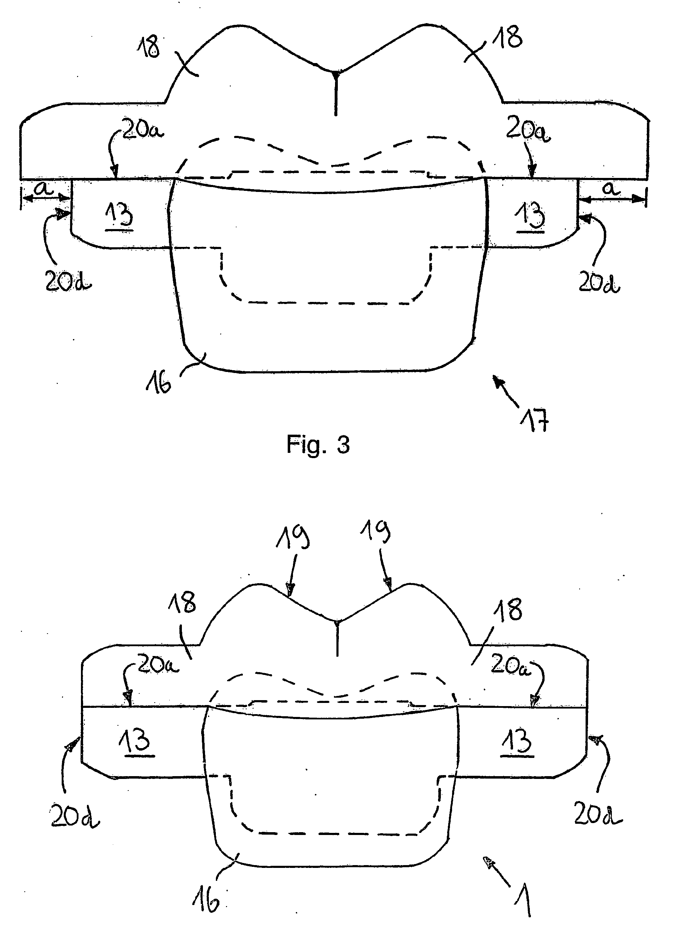

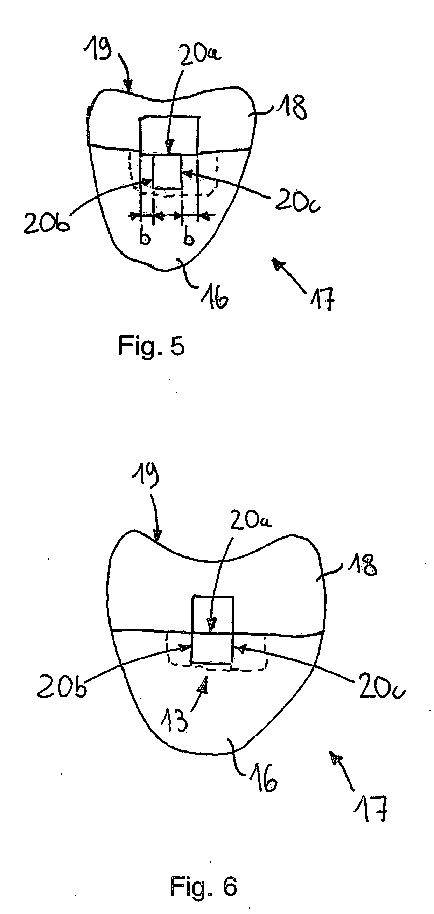

In Fig.3 ist erkennbar, dass bei dem zweiten Pulverspritzgießprozess eine zweite Keramikkomponente 18 an den ersten Formteil-Grünling angespritzt wird, welche bei der fertigen Zahnbrücke die Kaufläche 19 bildet. In Fig. 3 und 5 ist erkennbar, dass die Verankerungsvorsprünge 13 des Trägerteils 11 jeweils quer zueinander verlaufende Seitenwände 20a. 20b, 20c, 20d haben und dass die zweite Keramikkomponente 18 bei dem zweiten Pulverspritzgießprozess derart an die der Kaufläche 19 zugewandte Seitenwand 20a des jeweiligen Verankerungsvorsprungs angespritzt wird, dass sie Seitenwand 20a vollständig bedeckt und mit einem umlaufenden Randbereich seitlich über den Rand der Seitenwand 20a übersteht.

Nach dem Erstarren des Formteil-Grünlings 17 wird das Formwerkzeug geöffnet und der Formteil-Grünling 17 wird mit Hilfe eines Auswerferstifts 21 aus dem zweiten Formwerkzeugteil 3 ausgeworfen oder aus diesem entnommen. Dann wird der Formteil-Grünling 17 in einem Entbinderungsprozess entbindert, wobei zumindest der in der äußeren Schicht des Keramikmaterials enthaltene Binder aus diesem entfernt wird.

Danach wird der Formteil-Grünling 17 unter Einwirkung von Wärme und Unterdruck gesintert. Der Unterdruck oder der Unterdruckverlauf wird so auf die Temperatur oder den Temperaturverlauf des Sinterprozesses abgestimmt, dass zumindest die durch Pulverspritzgießen hergestellte äußere Keramikkomponente 18, vorzugsweise alle pulverspritzten Keramikkomponenten 16, 18 des Keramikteils 1 nach Beendigung des Sinterprozesses weitgehend oder vollständig porenfrei ist (sind). Die äußere Keramikkomponente 18 entspricht dann bezüglich ihrer Transparenz und Farbe derjenigen von natürlichem Zahnschmelz oder ist bezüglich ihrer Transparenz und Farbe zumindest derjenigen von natürlichem Zahnschmelz ähnlich.

Die bei den einzelnen Pulverspritzgießprozessen für einander angrenzende Keramikkomponenten 16, 18 des Keramikteils 1 verwendeten Formmassen sind bezüglich ihrer Schmelzpunkte und ihrer Wärmeausdehnungskoeffizienten so aufeinander abgestimmt, dass sich beim Sintern eine feste und weitestgehend rissfreie Verbindung zwischen den Keramikkomponenten 16, 18 ergibt.

Die Temperatur des Sinterprozesses wird kleiner gewählt als die Schmelztemperatur des Werkstoffs des Trägerteils 11, so dass sich die Festigkeit des Trägerteils 11 durch den Sinterprozess nicht oder nur unwesentlich reduziert. Dennoch wird bei dem Sinterprozess auch zwischen dem Trägerteil 11 und den daran angrenzenden Keramikkomponenten 16, 18 eine feste mechanische Verbindung erreicht.

Während des Entbinderns und/oder Sinterns verdichten sich die Keramikkomponenten 17, 19, wobei der Formteil-Grünling 17 auf die für das fertige Keramikteil gewünschten Abmessungen schrumpft.

Das Überstandsmaß a, b, um das die Keramikkomponente 18 des Formteil-Grünlings 17 seitlich über den Rand der Seitenwand 20a übersteht, ist unter Berücksichtigung der beim Entbindern und/oder Sintern auftretenden Schrumpfung derart gewählt, das die zweite Keramikkomponente 18 nach dem Sintern bündig mit dem Rand der Seitenwand 20a abschließt (Fig.4 und 6).

Das Brückenteil kann mit Hilfe einer aus DE 199 48 393 C1 bekannten Vorrichtung auf einfache Weise am Gebiss eines Patienten verankert werden. Dabei werden in die Nachbarzähne der mit Zahnbrücke zu schließenden Zahnlücke zu den Verankerungsvorsprüngen 13 des Brückenteils exakt passende Aufnahmen eingebracht. Dann wird das Brückenteil mit den Verankerungsvorsprüngen 13 in diese Aufnahmen eingesetzt. Ein eventuell zwischen den Verankerungsvorsprüngen 13 und den Aufnahmen der Nachbarzähne verbleibender Spalt wird mit Klebstoff, Zement oder dergleichen Dichtmittel überbrückt.

## Patentansprüche

1. Verfahren zum Herstellen eines als Zahnersatz oder Kunstzahn, insbesondere als Zahnbrücke, ausgebildeten Keramikteils (1), wobei in einem Pulverspritzgießprozess eine keramische Formmasse, die als Bestandteile zumindest ein keramisches Pulver und einen Binder enthält, unter Einwirkung von Wärme und/oder Druck in die Innenhöhlung eines Formwerkzeugs eingespritzt wird und dort zu einem Formteil-Grünling (15) erstarrt, **dadurch gekennzeichnet, dass** nach dem Spritzen des Formteil-Grünlings (15) in wenigstens einem weiteren Pulverspritzgießprozess zumindest eine weitere keramische Formmasse unter Einwirkung von Wärme und/oder Druck an den zuvor hergestellten Formteil-Grünling (15) angespritzt wird, dass sich die Formmassen von wenigstens zwei der Pulverspritzgießprozesse voneinander unterscheiden, und dass der durch die Pulverspritzgießprozesse erhaltene mehrkomponentige Formteil-Grünling (17) zur Bildung des fertigen Keramikteils (1) entbindert und gesintert wird, wobei das keramische Pulver wenigstens eines Pulverspritzgießprozesses derart ausgebildet ist, dass die daraus hergestellte Keramikkomponente (16, 18) des fertigen Keramikteils (1) transparent oder transluzent ist und dass das keramische Pulver wenigstens eines weiteren Pulverspritzgießprozesses derart ausgebildet ist, dass die daraus hergestellte Keramikkomponente (16, 18) des fertigen Keramikteils weniger transparent ist als die andere Keramikkomponente (18, 16).

2. Verfahren nach Anspruch 1, **dadurch gekennzeichnet, dass** der mehrkomponentige Formteil-Grünling (17) während des Sinterprozesses einem Unterdruck ausgesetzt wird, und dass der Unterdruck oder der Unterdruckverlauf so auf die Temperatur oder den Temperaturverlauf des Sinterprozesses abgestimmt wird, dass zumindest eine durch Pulverspritzgießen hergestellte äußere Keramikkomponente (18), vorzugsweise alle pulvergespritzten Keramikkomponenten (16, 18) des Keramikteils (1) nach Beendigung des Sinterprozesses weitgehend oder vollständig porenfrei ist sind.

3. Verfahren nach Anspruch 1 oder 2, **dadurch gekennzeichnet, dass** sich die Schmelztemperaturen der zum Pulverspritzgießen zweier unmittelbar aneinander angrenzender Keramikkomponenten (16, 18) des mehrkomponentigen Formteil-Grünlings (17) verwendeten keramischen Pulver um weniger als 150° C, insbesondere um weniger als 100°C und vorzugsweise um weniger als 50 ° C voneinander unterscheiden.

4. Verfahren nach einem der Ansprüche 1 bis 3, **dadurch gekennzeichnet, dass** sich der Wärmeausdehnungskoeffizient der zum Pulverspritzgießen zweier unmittelbar aneinander angrenzender Keramikkomponenten (16, 18) des mehrkomponentigen Formteil-Grünlings (17) verwendeten keramischen Pulver um weniger als 15%, insbesondere um weniger als 10% und vorzugsweise um weniger als 5% voneinander unterscheiden.

5. Verfahren nach einem der Ansprüche 1 bis 4, **dadurch gekennzeichnet, dass** die Korngröße der keramischen Pulver kleiner als 50µm, insbesondere kleiner als 30µm und vorzugsweise kleiner als 10µm ist.

6. Verfahren nach einem der Ansprüche 1 bis 5, **dadurch gekennzeichnet, dass** der in dem ersten Pulverspritzgießprozess hergestellte Formteil-Grünling (15) mit wenigstens einem weiteren Pulverspritzgießprozess mit einer keramischen Formmasse zumindest teilumspritzt und gegebenenfalls vollständig umspritzt wird.

7. Verfahren nach einem der Ansprüche 1 bis 6, **dadurch gekennzeichnet, dass** das keramische Pulver wenigstens eines Pulverspritzgießprozesses elektrisch leitfähig und das keramische Pulver wenigstens eines weiteren Pulverspritzgießprozesses elektrisch isolierend ist.

8. Verfahren nach einem der Ansprüche 1 bis 7, **dadurch gekennzeichnet, dass** in die Innenhöhlung des Formwerkzeugs ein Trägerteil (11) formschlüssig eingesetzt wird, und dass bei wenigstens einem Pulverspritzgießprozess mindestens eine keramische Formmasse an dieses Trägerteil (11) angespritzt wird und dass gegebenenfalls das Trägerteil (11) mit der Formmasse oder den Formmassen ringförmig umspritzt wird.

9. Verfahren nach einem der Ansprüche 1 bis 8, **dadurch gekennzeichnet, dass** das Trägerteil (11) aus einem metallischen Werkstoff besteht.

10. Verfahren nach einem der Ansprüche 1 bis 9, **dadurch gekennzeichnet, dass** das Trägerteil (11) aus einem keramischen Werkstoff besteht, vorzugsweise aus Zirkonoxid, Aluminiumoxid, Siliziumnitrid und/oder Silizumkarbid.

11. Verfahren nach einem der Ansprüche 1 bis 10, **dadurch gekennzeichnet, dass** das Trägerteil (11) wenigstens einen Verankerungsvorsprung (13) aufweist, der quer zueinander verlaufende Seitenwände (20a, 20b, 20c) hat, dass bei wenigstens einem Pulverspritzgießprozess an mindestens eine der Seitenwände (20a, 20b, 20c) eine keramische Formmasse derart angespritzt wird, dass sie seitlich über den Rand dieser Seitenwand (20a, 20b, 20c) oder die gerade Verlängerung wenigstens einer an diese Seitenwand (20a, 20b, 20c) angrenzenden Seitenwand (20a, 20b, 20c) um ein Überstandsmaß übersteht und dass das Uberstandsmaß unter Berücksichtigung einer beim Entbindern und/oder Sintern des Formteil-Grünlings auftretenden Schrumpfung derart gewählt wird, das die angespritzte Formmasse nach dem Sintern bündig mit dem Rand der sie aufweisenden Seitenwand (20a, 20b, 20c) oder der geraden Verlängerung der wenigstens einen an diese Seitenwand (20a, 20b, 20c) angrenzenden Seitenwand (20a, 20b, 20c) abschließt.

## Claims

1. Process for producing a ceramic part (1) constructed as a replacement tooth or artificial tooth, particularly as a dental bridge, wherein in a powder injection moulding process a ceramic moulding composition which contains as its ingredients at least one ceramic powder and a binder, is injected into the inner cavity of a moulding tool with the application of heat and/or pressure and hardens therein to form a green moulding (15), **characterised in that** after the injection of the green moulding (15), at least one other ceramic moulding composition is moulded onto the green moulding (15) produced previously, with the application of heat and/or pressure, in at least one further powder injection moulding process, **in that** the moulding compositions of at least two of the powder injection moulding processes differ from one another, and **in that** the multi-component green moulding (17) obtained from the powder injection moulding processes is freed from binder and sintered to form the finished ceramic part (1), the ceramic powder of at least one powder injection moulding process being designed so that the ceramic component (16, 18) of the finished ceramic part (1) produced therefrom is transparent or translucent and **in that** the ceramic powder of at least one other powder injection moulding process is designed such that the ceramic component (16, 18) of the finished ceramic part produced therefrom is less transparent than the other ceramic component (18, 16).

2. Process according to claim 1, **characterised in that** the multi-component green moulding (17) is subjected to a reduced pressure during the sintering process and **in that** the reduced pressure or the pattern of reduced pressure is matched to the temperature or temperature pattern of the sintering process such that at least one external ceramic component (18) produced by powder injection moulding, preferably all the powder-injected ceramic components (16, 18) of the ceramic part (1) are substantially or totally free from pores after the end of the sintering process.

3. Process according to claim 1 or 2, **characterised in that** the melt temperatures of the ceramic powders used for the powder injection moulding of two immediately adjacent ceramic components (16, 18) of the multi-component green moulding (17) differ from one another by less than 150°C, particularly by less than 100°C and preferably by less than 50°C.

4. Process according to one of claims 1 to 3, **characterised in that** the thermal expansion coefficient of the ceramic powders used for the powder injection moulding of two directly adjacent ceramic components (16, 18) of the multi-component green moulding (17) differ by less than 15%, particularly by less than 10% and preferably by less than 5%.

5. Process according to one of claims 1 to 4, **characterised in that** the particle size of the ceramic powders is less than 50 µm, particularly less than 30 µm and preferably less than 10 µm.

6. Process according to one of claims 1 to 5, **characterised in that** the green moulding (15) produced in the first powder injection moulding process is at least partially coated with a ceramic moulding composition in at least one additional powder injection moulding process and is if necessary totally enclosed by the coating.

7. Process according to one of claims 1 to 6, **characterised in that** the ceramic powder of at least one powder injection moulding process is electrically conductive and the ceramic powder of at least one additional powder injection moulding process is an electrical insulator.

8. Process according to one of claims 1 to 7, **characterised in that** a carrier part (11) is inserted in interlocking engagement in the inner cavity of the moulding tool and **in that**, in at least one powder injection moulding process, at least one ceramic moulding composition is moulded onto this carrier part (11) and if necessary the moulding composition or compositions is or are moulded around the carrier part (11) in a ring.

9. Process according to one of claims 1 to 8, **characterised in that** the carrier part (11) consists of a metallic material.

10. Process according to one of claims 1 to 9, **characterised in that** the carrier part (11) consists of a ceramic material, preferably zirconium oxide, aluminium oxide, silicon nitride and/or silicon carbide.

11. Process according to one of claims 1 to 10, **characterised in that** the carrier part (11) has at least one anchoring projection (13) which has sidewalls (20a, 20b, 20c) extending at right angles to one another, **in that** in at least one powder injection moulding process a ceramic moulding composition is injected onto at least one of the side walls (20a, 20b, 20c) in such a way that it projects laterally beyond the edge of this sidewall (20a, 20b, 20c) or a straight extension of at least one sidewall (20a, 20b, 20c) adjacent to this sidewall (20a, 20b, 20c) by a degree of protrusion and **in that** the degree of protrusion is selected, taking account of shrinkage that occurs during removal of the binder and/or sintering of the green moulding, such that after sintering the moulding composition injected on terminates flush with the edge of the sidewall (20a, 20b, 20c) that comprises it or the straight extension of the at least one sidewall (20a, 20b, 20c) adjacent to this sidewall (20a, 20b, 20c).

## Revendications

1. Procédé de fabrication d'une pièce en céramique (1) réalisée sous forme de prothèse dentaire ou de dent artificielle, notamment de bridge, sachant qu'au cours d'un processus d'injection de poudre, une matière céramique à mouler qui contient comme constituants au moins une poudre céramique et un liant est injectée sous l'action de chaleur et/ou de pression dans l'espace intérieur d'un moule et y est solidifiée en un comprimé cru (15) de pièce moulée, **caractérisé en ce que**, à la suite du moulage par injection du comprimé cru (15) de pièce moulée, au moins une autre matière céramique à mouler est, au cours d'au moins un autre processus d'injection de poudre, moulée sous l'action de chaleur et/ou de pression sur le comprimé cru (15) de pièce moulée préalablement fabriqué, **en ce que** les matières à mouler d'au moins deux des processus d'injection de poudre sont différentes, et **en ce que** le comprimé cru (17) de pièce moulée à plusieurs composants obtenu par les processus d'injection de poudre est débarrassé du liant et fritté afin de former la pièce finie en céramique (1), sachant que la poudre céramique d'au moins un processus d'injection de poudre est conçue ou réalisée de telle sorte que le composant céramique (16, 18) de la pièce finie en céramique (1) qui est fabriqué à partir d'elle est transparent ou translucide, et sachant que la poudre céramique d'au moins un autre processus d'injection de poudre est conçue ou réalisée de telle sorte que le composant céramique (16, 18) de la pièce finie en céramique qui est fabriqué à partir d'elle est moins transparent que l'autre composant céramique (18, 16).

2. Procédé selon la revendication 1, **caractérisé en ce que** le comprimé cru (17) de pièce moulée à plusieurs composants est exposé pendant le processus de frittage à une dépression, et **en ce que** la dépression ou l'allure de dépression est adaptée à la température ou à l'allure de température du processus de frittage de telle sorte qu'au moins un composant céramique extérieur (18) fabriqué par injection de poudre, de préférence tous les composants céramiques (16, 18) de la pièce en céramique (1) fabriqués par injection de poudre, est/sont essentiellement ou totalement dépourvu(s) de pores à l'achèvement du processus de frittage.

3. Procédé selon la revendication 1 ou 2, **caractérisé en ce que** les températures de fusion des poudres céramiques utilisées pour le moulage par injection de poudre de deux composants céramiques directement adjacents (16, 18) du comprimé cru (17) de pièce moulée à plusieurs composants sont différentes de moins de 150 °C, notamment de moins de 100 °C et de préférence de moins de 50 °C.

4. Procédé selon l'une des revendications 1 à 3, **caractérisé en ce que** les coefficients de dilatation thermique des poudres céramiques utilisées pour le moulage par injection de poudre de deux composants céramiques directement adjacents (16, 18) du comprimé cru (17) de pièce moulée à plusieurs composants sont différents de moins de 15 %, notamment de moins de 10 % et de préférence de moins de 5 %.

5. Procédé selon l'une des revendications 1 à 4, **caractérisé en ce que** la grosseur de grain des poudres céramiques est inférieure à 50 µm, notamment inférieure à 30 µm et de préférence inférieure à 10 µm.

6. Procédé selon l'une des revendications 1 à 5, **caractérisé en ce que** le comprimé cru (15) de pièce moulée fabriqué au cours du premier processus d'injection de poudre est, par au moins un autre processus d'injection de poudre, enrobé au moins partiellement et éventuellement totalement d'une matière céramique à mouler.

7. Procédé selon l'une des revendications 1 à 6, **caractérisé en ce que** la poudre céramique d'au moins un processus d'injection de poudre est électroconductrice et la poudre céramique d'au moins un autre processus d'injection de poudre est électriquement isolante.

8. Procédé selon l'une des revendications 1 à 7, **caractérisé en ce qu'**un élément porteur (11) est inséré en engagement positif dans l'espace intérieur du moule et **en ce que**, lors d'au moins un processus d'injection de poudre, au moins une matière céramique à mouler est moulée sur cet élément porteur (11), et **en ce que** l'élément porteur (11) est éventuellement enrobé annulairement par la ou les matières à mouler.

9. Procédé selon l'une des revendications 1 à 8, **caractérisé en ce que** l'élément porteur (11) est constitué d'une ou réalisé en une matière métallique.

10. Procédé selon l'une des revendications 1 à 9, **caractérisé en ce que** l'élément porteur (11) est constitué d'une ou réalisé en une matière céramique, de préférence d'oxyde de zircone, d'oxyde d'aluminium, de nitrure de silicium et/ou de carbure de silicium.

11. Procédé selon l'une des revendications 1 à 10, **caractérisé en ce que** l'élément porteur (11) présente au moins une saillie d'ancrage (13) qui possède des parois latérales (20a, 20b, 20c) s'étendant transversalement les unes par rapport aux autres, **en ce que**, lors d'au moins un processus d'injection de poudre, une matière céramique à mouler est moulée sur au moins une des parois latérales (20a, 20b, 20c) de telle sorte qu'elle dépasse latéralement, d'une cote de dépassement donnée, du bord de cette paroi latérale (20a, 20b, 20c) ou du prolongement rectiligne d'au moins une paroi latérale (20a, 20b, 20c) adjacente à cette paroi latérale (20a, 20b, 20c), et **en ce que** la cote de dépassement est choisie, en tenant compte d'une rétraction apparaissant lorsque le comprimé cru de pièce moulée est débarrassé du liant et/ou fritté, de telle sorte que la matière moulée, à la suite du frittage, se termine à fleur du bord de la paroi latérale (20a, 20b, 20c) qui en est pourvue, ou du prolongement rectiligne de la paroi latérale au moins unique (20a, 20b, 20c) adjacente à cette paroi latérale (20a, 20b, 20c).
